# EUROPÄISCHE PATENTSCHRIFT

(11) **EP 0 571 800 B1**
(45) Veröffentlichungstag und Bekanntmachung des Hinweises auf die Patenterteilung: **22.11.1995**
(21) Anmeldenummer: 93107519.6
(22) Anmeldetag: 08.05.1993
(51) Int. Cl.: B65G 35/08, B65G 35/00, B60T 7/22

(54) **Kollisionsschutzeinrichtung für fahrerlose Flurförderzeuge**
Anticollision device for driverless floor trucks
Dispositif de protection contre les collisions pour chariots au sol sans conducteur

(30) Priorität: 25.05.1992 DE 4217264
(43) Veröffentlichungstag der Anmeldung: 01.12.1993
(73) Patentinhaber: INDUMAT GmbH & Co. KG Transport- und Lagersysteme, D-72770 Reutlingen (DE)
(72) Erfinder: Heberle, Kurt, Dipl.-Ing. (FH), W-7454 Bodelshausen (DE)
(74) Vertreter: Kasseckert, Rainer

(56) Entgegenhaltungen:
- EP-A- 0 192 940
- DE-A- 4 020 286
- US-A- 3 636 884

## Beschreibung

Die Erfindung betrifft eine Kollisionsschutzeinrichtung für fahrerlose Flurförderzeuge, vorzugsweise selbstfahrende Montageplattformen (Skids), mit front- und/oder endseitig des Flurförderzeuges angeordneten Schaltbügeln, die mittels beidseitiger Kniehebel am Flurförderzeug zumindest in Richtung dessen Längsachse verschiebbar angelenkt sind, wobei die Schaltbügel bei abstandsweiser Einzelfahrt der Flurförderzeuge in einer äußeren Betriebsstellung maximal der Fahrzeugkontur hervorragen und beim Aufprall auf ein Hindernis über Schaltmittel das Flurförderzeug verzögern und/oder dessen Fahrantrieb abschalten, und wobei die Schaltbügel zur Bildung eines abstandslosen Schubverbandes zumindest zweier Flurförderzeuge in eine gegen das Flurförderzeug gerichtete Außerbetriebsstellung eindrückbar sind.

Aus dem Stand der Technik sind eine Vielzahl von Kollisions- und Hindernisschutzeinrichtungen für Flurförderzeuge bekannt, die beim Auftreffen auf ein Hindernis gleich welcher Art, d.h. eine Sache oder eine Person, über mechanische, hydraulische, elektrische oder elektronische Steuermittel das Fahrzeug bis zu dessen Stillstand verzögern, entweder durch Auslösung eines Bremsvorganges, d.h. Einfall der Bremsen und/oder durch Ausschaltung des Fahrantriebes. Derartige Hindernisschutzeinrichtungen sind i.d.R. den Stirnseiten der Fahrzeuge vorgebaut, insbesondere in Fahrtrichtung, weshalb sich dieselben nicht im Schubverband bewegen können, da sie sich einerseits durch Berührung deren Schutzeinrichtungen gegenseitig abschalten würden und da andererseits die erforderlichen Schubkräfte nicht übertragbar sind.

Die DE-A 40 20 286 offenbart eine aus selbstfahrenden Skids gebildete Montagelinie, in der die Skids nach selbsttätiger Außerbetriebssetzung ihrer Eigenantriebe lückenlos aneinander aufgestaut werden und als Schubverband mittels eines gemeinsamen, externen Antriebsmoduls mit regelbarer Geschwindigkeit zwangsgeführt weiterlaufen, wozu vordere und hintere Sicherheitsschaltbügel jedes Skids beim Aufeinanderfahren über Kniehebel teilweise bis zu einem Anschlag eingedrückt werden. Da bei dieser Anordnung die Schubkräfte zum Weiterführen des gesamten Schubverbandes direkt über die Kniehebel übertragen werden, müssen diese entsprechend stark dimensioniert werden, um die Schubkräfte aufnehmen zu können. Die dadurch bedingte Massenerhöhung erhöht auch das Trägheitsmoment und kann sich bei Notabschaltung des Skids infolge Kollision mit einem Hindernis verzögernd auswirken, da die Feinfühligkeit der Sicherheitsschaltbügel beeinträchtigt wird. Da diese in der Regel mit elastischen, leicht kompressiblen und verformbaren Personenschutzeinrichtungen in Form sogenannter "Bumper" ausgestattet sind, wird eine Übertragung von Schubkräften über die Sicherheitsschaltbügel vereitelt. In Abhängigkeit von Aufbau und Oberflächenverkleidung der Sicherheitsschaltbügel besteht außerdem die Gefahr, daß dieselben beim nur teilweisen Einfahren innerhalb des Schubverbandes keine in sich geschlossene, begehbare Fläche bilden und somit die Unfallgefahr der Montagewerker erhöhen.

Der Erfindung liegt deshalb die Aufgabe zugrunde, mit einem Minimum an Aufwand und Herstellungskosten eine störunanfällige und insbesondere betriebssichere Kollisionsschutzeinrichtung für fahrerlose Flurförderzeuge zu schaffen, die die zuvor genannten Nachteile vermeidet und sich sowohl für das abstandsweise Fahren der Flurförderzeuge im Individualverkehr als auch für deren lückenloses Fahren im gemeinsamen Schubverband eignet, wobei die Umstellung der Kollisionsschutzeinrichtung auf die jeweilige Betriebsart automatisch ohne das Erfordernis eines menschlichen Eingriffes erfolgen soll.

Gemäß der Erfindung wird die obige Aufgabe dadurch gelöst, daß die Verschiebung der Schaltbügel von ihrer Betriebsstellung in ihre Außerbetriebsstellung und umgekehrt stationär auslösbar sowie automatisch steuerbar ist, wobei die Schaltmittel zeitgleich mit der Verschiebung automatisch inaktivierbar und reaktivierbar sind und wobei die Außerbetriebsstellung der Schaltbügel vollständig innerhalb der Fahrzeugkontur liegt, dergestalt, daß die Schubkräfte vom jeweils zuhinterst fahrenden Flurförderzeug direkt auf den Fahrzeugrahmen des jeweils zuvor fahrenden Flurförderzeuges übertragbar sind.

Durch diese Anordnung wird gewährleistet, daß die Kollisionschutzeinrichtung mit der erforderlichen Feinfühligkeit ausgebildet sein kann und das Flurförderzeug im Individualbetrieb bei Kollision mit einem Hindernis absolut sicher abschaltet, wobei sich die Kollisionsschutzeinrichtung mit hoher Zuverlässigkeit selbsttätig auf Schubverbandsbetrieb umschaltet, so daß auch hohe Schubkräfte spielfrei übertragen werden können, ohne dabei Gefahr zu laufen, Fahrzeugeinrichtungen zu beschädigen oder gar zu zerstören. Das Erfordernis kostenintensiver manueller Fahrzeugumstellungen wird ausgeschlossen, so daß sich der Montagewerker auf seine eigentliche Montagearbeit konzentrieren kann. Da die Steuerung zur automatischen Auslösung der Verschiebung der Schaltbügel einmalig direkt in die Montagelinie verlegt wurde, kann der steuerungstechnische Aufwand auf den einzelnen Flurförderzeugen so gering wie möglich gehalten werden, was insbesondere die Systemkosten umfangreicher Montageanlagen mit bis zu hundert Fahrzeugen erheblich reduziert.

In Weiterbildung des Erfindungsgedankens sind die Schaltbügel gegenüber dem Fahrzeugrahmen federbelastet vorgespannt und gegen die Vorspannkraft (Federkraft) mechanisch zwangsgeführt in ihre Außerbetriebsstellung verschiebbar. Durch diese mechanische Zwangssteuerung werden menschliche Fehleingriffe ausgeschlossen und eine hohe Betriebssicherheit gewährleistet.

Zwecks Unabhängigkeit von stationären Einrichtungen - falls die stationsseitigen Raumverhältnisse oder spezielle Einsatzerfordernisse dies beispielsweise nicht zulassen - sind die Schaltbügel gegenüber dem Flurförderzeug federbelastet vorgespannt und gegen die Vorspannkraft (Federkraft) zumindest von ihrer Betriebsstellung in ihre Außerbetriebsstellung motorisch verschiebbar, wobei zur motorischen Verschiebung der Schaltbügel fahrzeugstationäre Zug- und/oder Druckmittel, vorzugsweise mechanischer Bauart, vorgesehen sind, so daß der Fachmann auf kostengünstige handelsübliche Bauelemente zurückgreifen kann.

Dabei hat es sich als vorteilhaft erwiesen, daß die motorische Verschiebung der Schaltbügel mittels stationärer, vorzugsweiser kontaktloser, Signalübertragung und/oder wegstreckenmeßabhängig auslösbar ist.

Um den steuerungstechnischen Aufwand so gering wie möglich zu halten, sind gemäß einer vorteilhaften Ausgestaltung der Erfindung die Schaltbügel mittels Federkraft wieder automatisch in ihre Betriebsstellung verschiebbar, was das Erfordernis manueller Stelleingriffe ausschließt und somit der Betriebssicherheit zugute kommt.

Eine besondere Variante der Erfindung zeichnet sich dadurch aus, daß jeder Kniehebel Teil eines zwischen dem Schaltbügel und dem Fahrzeugrahmen angeordneten mehrgelenkigen Hebelgetriebes ist, das als Viergelenk ausgebildet ist, wobei durch die spezielle Hebelgeometrie ein leichtes und zuverlässiges Verschieben des Schaltbügels gewährleistet wird.

Bei einer weiterbildenden Maßnahme des Erfindungsgedankens ist der Öffnungswinkel des Kniehebels einsatz- und/oder geschwindigkeitsabhängig veränderbar, dergestalt, daß am ersten Kniehebelarm ein dem freien Ende des zweiten Kniehebelarms gegenüberliegender und mit diesem in Wirkverbindung stehender einstellbarer Anschlag befestigt ist, wodurch sich der Nachlauf des Schaltbügels und dessen Verschiebeweg anpassen lassen.

Eine zweckmäßige Ausbildungsform der Erfindung besteht darin, daß am ersten Kniehebelarm ein der Fahrzeugaußenseite zugewandter Rollenhebel befestigt ist, dessen endseitige Steuerrolle mit einer sich im Einlaufbereich zur Schubverbandstrecke in Fahrtrichtung verjüngenden und sich in deren Auslaufbereich erweiternden stationären Führungsschiene in Wirkverbindung steht, dergestalt, daß beim Einlaufen eines Flurförderzeuges in die Schubverbandstrecke der erste Kniehebelarm unter Verringerung des Öffnungswinkels des Kniehebels eindrückbar ist, wobei der Federhebel entgegen der Federkraft zumindest eines Federmittels verschiebbar ist. Diese einfache Art der mechanischen Zwangssteuerung ist absolut zuverlässig in ihrer Wirkungsweise, störunanfällig und im Prinzip wartungsfrei sowie in Ermangelung elektronischer bzw. hydraulischer Steuermittel äußerst kostengünstig, was insbesondere bei großen Montagesystemen mit einer Vielzahl von Flurförderzeugen zum Tragen kommt.

Eine vorteilhafte Kennzeichnung der Erfindung besteht darin, daß die Querführung als motorisch antreibbare Gewindespindel ausgebildet ist, auf der die Führungshülsen mittels Spindelmuttern zumindest in einer Richtung verschiebbar sind, wodurch sich entsprechende stationäre Steuereinrichtungen erübrigen.

Gemäß einer baulichen Besonderheit der Erfindung sind auf der Querführung zwei, sich an einem mittigen, stationären Festanschlag abstützende separate Federmittel vorgesehen. Hieraus ergibt sich der Vorteil, daß jedes der beidseitigen Hebelgetriebe unabhängig voneinander separat für sich federbelastet vorgespannt ist, wodurch sich der Schaltbügel nicht nur parallelverschieben läßt, sondern beim einseitigen Aufprall auf ein Fahrbahnhindernis auch schräg eingeschoben werden und das Flurförderzeug notabschalten kann.

Bei bestimmten Fördersystemen empfiehlt es sich, in Abhängigkeit von Fahrzeugtyp und -aufbau an den Führungshülsen gegen die Vorspannkraft (Federkraft) motorisch betätigbare Zugmittel zu befestigen, was ebenfalls einer Unabhängigkeit von stationären Führungs- und Steuereinrichtungen dient, beispielsweise dann, wenn beengte Raumverhältnisse eine Bodeninstallation derselben vereiteln.

Um ein Optimum an Betriebssicherheit zu gewährleisten und Unfallgefahren für Mensch und Fahrzeug zu minimieren, sind am vorderen Schaltbügel leicht kompressible Personenschutz-Elemente angeordnet, in denen redundant zum Schaltelement signalauslösende Schaltbänder eingebettet sind.

Zusätzliche vorteilhafte Ausgestaltungen und sinnvolle Weiterbildungen des Erfindungsgedankens ergeben sich aus den weiteren Unteransprüchen.

Die Erfindung läßt mehrere Ausführungsformen zu. Eine davon ist exemplarisch in den Figuren dargestellt und nachfolgend beschrieben. Es zeigen:
- **Fig. 1**: Eine Seitenansicht eines als selbstfahrende Montageplattform ausgebildeten fahrerlosen Flurförderzeuges,
- **Fig. 2**: eine Draufsicht auf eine erfindungsgemäße Kollisionsschutzeinrichtung mit Darstellung eines Schaltbügels in Betriebs- und Außerbetriebsstellung,
- **Fig. 3**: eine einseitige Detailansicht von Fig. 2 mit Darstellung der Hebelgeometrie eines Hebelgetriebes und zugehöriger mechanischer Zwangssteuerung und
- **Fig. 4**: eine Draufsicht auf eine Schubverbandsstrecke mit stationären Antriebs- und Führungseinrichtungen.

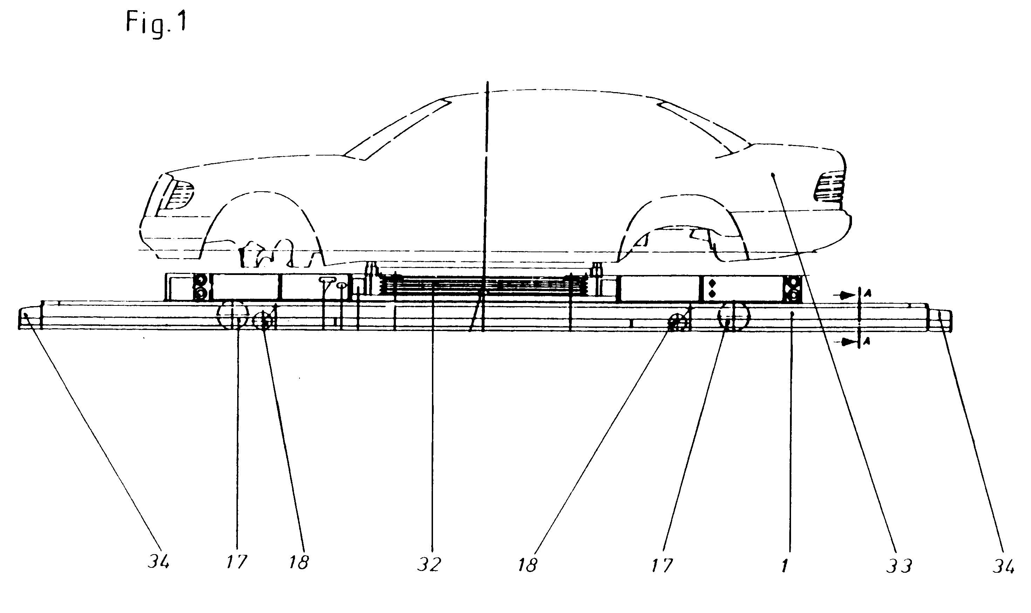

Gemäß Fig. 1 ist ein fahrerloses Flurförderzeug 1 als selbstfahrende Montageplattform (Skid) ausgebildet. Das Flurförderzeug 1 ist im vorderen und hinteren Bereich mit jeweils einem mittig angeordneten sowie lenk- und steuerbaren Antriebsrad 17 ausgestattet, mittels dem bzw. denen sich das Flurförderzeug 1 eigenständig bewegen läßt. Beidseitig des bzw. der Antriebsräder 17 sind seitliche Stützrollen 18, vorzugsweise Stützrollenpaare, vorgesehen. Auf dem Flurförderzeug 1 befindet sich eine Hubeinrichtung 32, mittels der ein Montagekörper 33, im Ausführungsbeispiel eine Pkw-Karosserie, höhenveränderbar ist. Außerdem ist das Flurförderzeug 1 front- und endseitig mit in Fig. 1 nur schematisch angedeuteten Kollisionsschutzeinrichtungen 34 ausgestattet, die nachfolgend detailliert beschrieben werden.

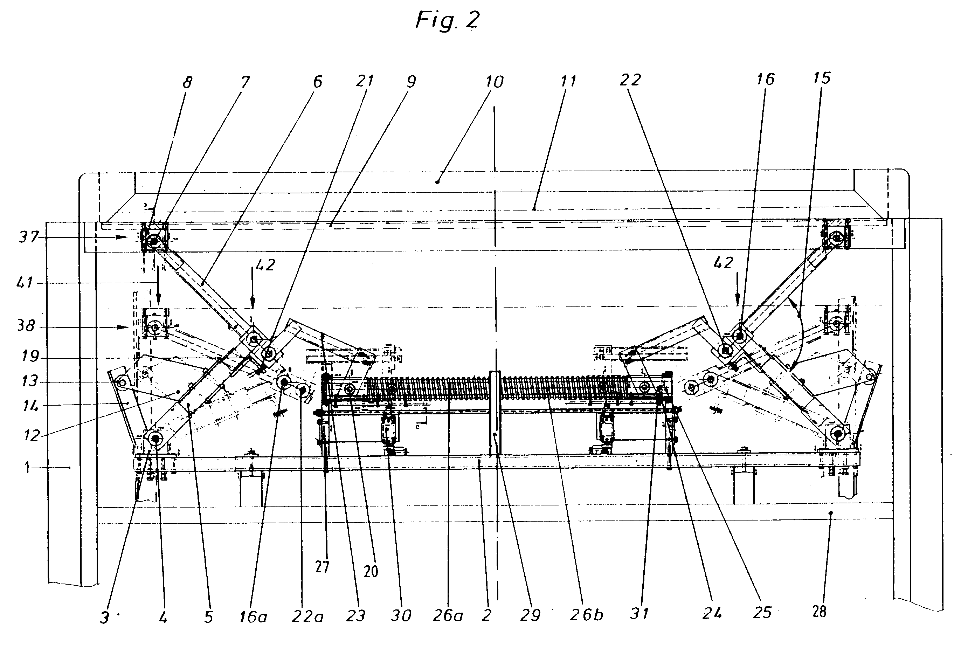

In Fig. 2 ist eine dieser Kollisionsschutzeinrichtungen 34 als Draufsicht in einem Zustand aufgezeigt, in der die Oberflächenverkleidung abgenommen ist. Dabei ist an einem nicht näher dargestellten und beschriebenen Fahrzeugrahmen 28 bekannter Bauweise eine annähernd über die gesamte Fahrzeugbreite hindurchgehende Quertraverse 2 angeordnet. An der Quertraverse 2 sind beidendig Halter 3 fixiert, vorzugsweise angeschweißt oder angeschraubt. In jedem Halter 3 ist in einem festen Gelenkpunkt 4 ein erster Hebelarm 5 eines Kniehebels 5, 6 verdrehbar angelenkt, der Teil eines mehrgelenkigen Hebelgetriebes 42 ist. Dieses ist vorzugsweise als Viergelenk ausgebildet, kann aber in Abhängigkeit von Fahrzeuggeometrie und Einsatzbedingungen eine mehr oder weniger große Anzahl von Gelenken aufweisen. Ein zweiter Hebelarm 6 des Kniehebels 5, 6 ist in einem beweglichen Gelenkpunkt 7 eines Halters 8 gelagert, an dem ein frontseitiger Schaltbügel 9 befestigt ist. Der Schaltbügel 9 ist mit einem elastischen Personenschutz-Element 10 leicht kompressiblen Materials, einem sog. "Bumper", ausgerüstet, in den bekannterweise schematisch angedeutete Schaltbänder 11 eingebettet sind.

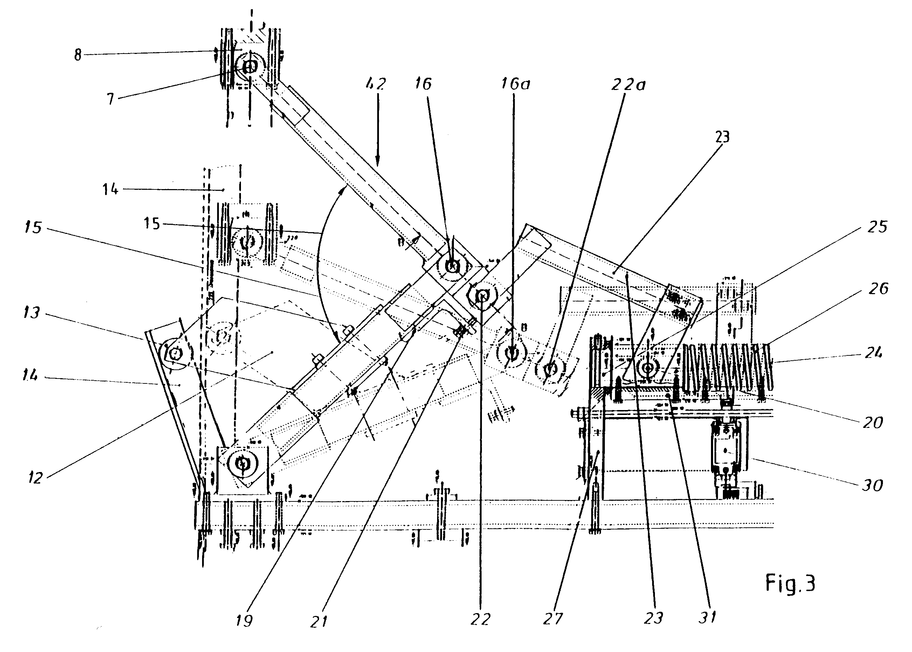

Am ersten Hebelarm 5 ist ein der Fahrzeugaußenseite zugewandter Rollenhebel 12 befestigt, an dem endseitig eine Steuerrolle 13 angeordnet ist, die mit einer stationären Führungsschiene 14 zwecks Veränderung des Öffnungswinkels 15 des Kniehebels 5, 6 in Wirkverbindung steht (s. Fig. 3). Zur Begrenzung des Öffnungswinkels 15 ist gegenüber einem über ein Kniegelenk 16 des Kniehebels 5, 6 hinausragenden freien Ende des zweiten Hebelarms 6 am ersten Hebelarm 5 ein Anschlag 19 befestigt. Dieser kann als Festanschlag oder als einstellbarer Anschlag ausgeführt sein. Im Ausführungsbeispiel gemäß Fig. 3 ist der Anschlag 19 winkelförmig ausgebildet, wobei ein Winkelarm dem zweiten Hebelarm 6 parallel gegenübersteht. In diesem Winkelarm ist eine Stellschraube 21 angeordnet, die sich am zweiten Hebelarm 6 abstützt.

In der über das Kniegelenk 16 hinausragenden Verlängerung des zweiten Hebelarms 6 ist in einem Gelenkpunkt 22 ein Federhebel 23 verdrehbar angeordnet. Dieser besteht im Ausführungsbeispiel aus drei nicht näher bezeichneten, biegesteif miteinander verbundenen Hebelteilen in annähernd u-förmiger Anordnung. Das andere Ende des Federhebels 23 ist in einem Gelenkpunkt 20 an einer Führungshülse 24 angelenkt, die in einer Querführung 25 gegen die Kraft zumindest eines Federmittels 26 in Form einer Schubkurbel geradgeführt verschiebbar ist. Die Querführung 25 kann verschiedene Querschnittsformen aufweisen, ist jedoch vorzugsweise als Federwelle ausgebildet. Diese ist quer zur Längsachse des Flurförderzeuges 1 in zwei Wellenhaltern 27 angeordnet, welche an der Quertraverse 2 fixiert, vorzugsweise angeschweißt oder festgeschraubt, sind.

Das Federmittel 26 kann mechanischer, hydraulischer oder pneumatischer Bauart sein und ist im Ausführungsbeispiel vorzugsweise als Druckfeder ausgebildet. Wie in Fig. 2 dargestellt, können anstelle eines einzigen Federmittels 26 zwischen den Führungshülsen 24 der beidseitigen Federhebel 23 jeweils zwei separate Federmittel 26 a und 26 b zur Anwendung kommen. In diesem Fall ist mittig der Querführung 25 eine an der Quertraverse 2 befestigter Festanschlag 29 angeordnet, an dem sich die beiden Federmittel 26 a und 26 b beim Zusammenpressen durch die Führungshülsen 24 abstützen.

Gegenüber der Querführung 25 ist an der Quertraverse 2 im Verschiebebereich jeder Führungshülse 24 ein Schaltmittel 30 fixiert, das auf elektromechanischer, optischer oder optoelektronischer Basis arbeitet. Der Einfachheit halber ist im Ausführungsbeispiel der Fig. 2 und 3 das Schaltmittel 30 als Endschalter dargestellt. Dieser steht mit einer an der Führungshülse 24 befestigten Schaltplatte 31 in Wirkverbindung, die den Endschalter (Schaltmittel 30) während der nach innen zur Fahrzeuglängsachse gerichteten Verschiebung der Führungshülse 24 kontaktiert. Schaltmittel 30 und Schaltplatte 31 sind zwecks Veränderung des Schaltweges bzw. des Schaltzeitpunktes relativ zueinander verstell- und arretierbar.

In spezifischen Anwendungsfällen kann es in Abhängigkeit stations-, betriebs- bzw. fahrzeugbedingter Parameter vorteilhaft sein, die Schaltbügel 9 anstatt mechanisch zwangsgeführt in äquivalenter Weise motorisch zumindest von ihrer Betriebsstellung 37 in ihre Außerbetriebsstellung 38 zu verschieben. Gemäß einer nicht näher dargestellten Ausführungsform können hierzu sowohl Zug- als auch Druckmittel unterschiedlichster, vorzugsweise mechanischer Bauart zum Einsatz kommen, die mit motorischen Antriebsmitteln gekoppelt oder koppelbar sind.

Die Druckmittel sind vorzugsweise als Spindelantrieb bekannter Bauart ausgebildet, wobei in diesem Fall die Querführung 25 gegen eine Gewindespindel ausgetauscht wird, die jeweils hälftig ein gegenläufiges Gewinde aufweist. Stattdessen ist auch die Anordnung zweier separater, mittig gelagerter Gewindespindeln mit Rechts- und Linksgewinde denkbar. Endseitig der Gewindespindel sind Spindelmuttern angeordnet, die beim motorischen Verdrehen der Gewindespindel auf dieser nach innen wandern und dabei die Führungshülsen 24 gegen die Vorspannkraft der Federmittel gegeneinander verschieben.

Als Zugmittel sind beispielsweise Zahnriemen, Ketten oder andere wirkungsäquivalente Maschinenelemente einsetzbar, die in den Gelenkpunkten 20 an den Führungshülsen 24 befestigt und zur Verschiebung des Schaltbügels 9 von seiner Betriebsstellung 37 in seine Außerbetriebsstellung 38 gegen die Vorspannkraft (Federkraft) motorisch bewegbar sind. Dabei können die Zugmittel einteiliger, endloser Bauart oder stattdessen zweiteilig linear ausgebildet sein, wobei dann in letzterem Fall jedem Hebelgetriebe 42 ein separates lineares Zugmittel zugeordnet ist.

Der Steuerbefehl zur Aktivierung der zuvor erwähnten Zug- oder Druckmittel wird dabei an vorbestimmten Fixpunkten einer Schubverbandsstrecke bzw. Montagelinie stationär ausgelöst, beispielsweise bei einfachen und kostengünstigen Fördersystemvarianten mittels Schaltnocken oder anderer wirkungsäquivalenter mechanischer Signalgeber. Alternativ dazu können komplexe Fördersysteme eine Maximierung des Automatisierungsaufwandes rechtfertigen. In diesem Fall empfiehlt es sich, die fahrzeugstationären Zug- oder Druckmittel an entsprechenden Stellen des Fahrkurses kontaktlos anzusteuern, wobei die Signal- und/oder Datenübertragung mittels optischer, optoelektronischer, kapazitiver, induktiver o.ä. Signalgeber erfolgt. Bei Bedarf können die Flurförderzeuge 1 auch mit fahrzeuginternen Wegstreckenzählern ausgerüstet werden, die entweder alleine oder in Kombination mit einem oder mehreren der zuvor erwähnten Signalgeber - vorzugsweise programmgesteuert - wegstreckenabhängige Steuersignale erzeugen.

Bei der zuvor beschriebenen Ausführungsform bietet sich anstelle der mechanischen Zug- und/oder Druckmittel auch der Einsatz hydraulischer oder pneumatischer Bauelemente, wie z.B. hydraulische Hubkolben oder pneumatische Druckfedern, an. Da sämtliche der zuvor genannten Mittel handelsüblicher Bauart sind, werden diese in Funktion und Aufbau als bekannt vorausgesetzt und sind demzufolge nicht näher beschrieben und dargestellt.

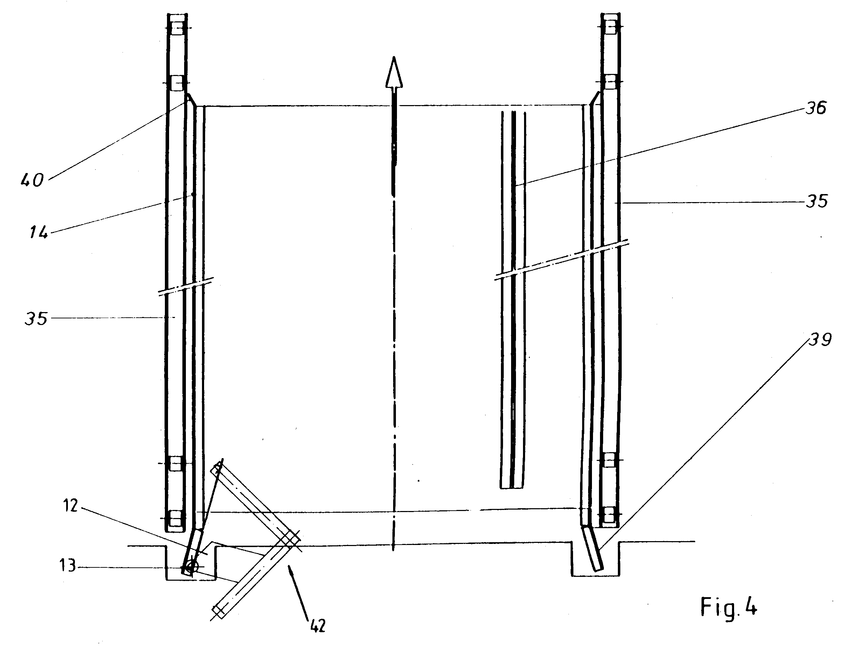

Fig. 4 zeigt in schematischer Darstellung die stationsseitigen Einrichtungen einer Schubverbandsstrecke. Als stationäre Antriebseinrichtung für einen Schubverband mehrerer Flurförderzeuge 1 sind dabei exemplarisch beidseitige Rollenbahnen 35 vorgesehen, auf denen die Flurförderzeuge 1 zwangsangetrieben weitergeführt werden. Es versteht sich von selbst, daß wirkungsäquivalente Antriebsmittel, wie z.B. Kettenförderer, Reibrollen- oder Bandantriebe u.ä., einsetzbar sind. Zwischen den beidseitigen Rollenbahnen 35 kann in Fahrzeuglaufrichtung zumindest ein bodeninstalliertes Führungselement 36, beispielsweise eine Laufschiene, zur Längsführung des Schubverbandes vorgesehen sein. Innerhalb der Rollenbahnen 35, parallel zur Längsrichtung derselben, sind die Führungsschienen 14 angeordnet. Diese sind in Fahrtrichtung des Flurförderzeuges 1 gesehen im Anfangsbereich mit sich trichterförmig nach innen verjüngenden Einlaufschrägen 39 und im Endbereich mit sich trichterförmig nach außen erweiternden Auslaufschrägen 40 versehen.

Die Wirkungsweise der erfindungsgemäßen Kollisionsschutzeinrichtung 34 ist nachfolgend näher erläutert.

Die Fig. 2 und 3 zeigen die Kollisionsschutzeinrichtung 34 in ausgefahrenem Zustand in ihrer Betriebsstellung 37 und, strichpunktiert dargestellt, in eingefahrenem Zustand in ihrer Außerbetriebsstellung 38. Das Flurförderzeug 1 wird im Individualbetrieb bei Einzelfahrt automatisch gesteuert, beispielsweise induktiv geführt. Während dieser automatischen Betriebsweise ist die Kollisionsschutzeinrichtung 34 aktiviert und befindet sich in der mit dem Bezugspfeil 37 gekennzeichneten Betriebsstellung, in der der Nachlauf des Schaltbügels 9 größer ist als der Verzögerungsweg des Flurförderzeuges 1 bis zum Stillstand. Mittels der im Anschlag 19 befindlichen Stellschraube 21 kann durch Veränderung des Öffnungswinkels 15 des Kniehebels 5, 6 der Nachlauf einsatz- und/oder geschwindigkeitsabhängig eingestellt werden.

Sobald nun das Flurförderzeug 1 auf ein im Fahrbahnbereich befindliches Hindernis - gleich welcher Art - auffährt, wird das am frontseitigen Schaltbügel 9 angeordnete Personenschutz-Element 10 eingedrückt und dabei elastisch verformt und über das darin eingebettete Schaltband 11 und/oder das Schaltelement 30 in bekannter Weise ein Signal zur Notabschaltung des Flurförderzeuges 1 ausgelöst. In der Regel wird hierdurch eine Motorbremse betätigt bzw. der Fahrantrieb abgeschaltet, wodurch das Flurförderzeug 1 auf kürzestem Wege bis zum Stillstand verzögert wird. Falls das Flurförderzeug 1 mit Radbremsen ausgestattet ist, können diese zusätzlich betätigt werden.

In vielen Anwendungsfällen besteht Bedarf, die einzelnen Flurförderzeuge 1 aufzustauen und gemeinsam als geschlossenen Schubverband zwangsgeführt mittels Fremdantrieb weiterlaufen zu lassen, wodurch u.a. die Energiekapazität des Eigenantriebs geschont und somit die Fahrzeuglaufzeit erheblich verlängert werden kann. Hierzu dienen die in Fig. 4 dargestellten Rollenbahnen 35.

Da hierbei die Flurförderzeuge 1 oft auch als Montageplattformen für die Herstellung und Montage von Werkstücken, Gegenständen oder Vorrichtungen dienen, auf denen die Montagewerker während ihrer Arbeit direkt mitfahren, müssen die Flurförderzeuge 1 im Schubverband zwecks Ausschlusses jeglichen Verletzungsrisikos und Unfallgefahren für Personen eine geschlossene begehbare Oberfläche bilden, d.h. es dürfen keinerlei Abstände zwischen den einzelnen Flurförderzeugen 1 mehr vorhanden sein. Da sich dabei die Enden der Flurförderzeuge 1 berühren, wobei das jeweils zuhinterst fahrende Flurförderzeug 1 die vorderen schiebt, ist es erforderlich, die Kollisionsschutzeinrichtungen 34 bei der Bildung eines Schubverbandes außer Betrieb zu setzen, einerseits um die erforderlichen Schubkräfte übertragen zu können, andererseits um eine Notabschaltung der Flurförderzeuge 1 zu verhindern. Dies geschieht in nachfolgend beschriebener Weise.

Beim Einfahren eines Flurförderzeuges 1 in die in Fig. 4 dargestellte Schubverbandsstrecke, beispielsweise eine Montagelinie, laufen die Steuerrollen 13 der Rollenhebel 12 der beidseitigen Hebelgetriebe 42 zwangsgeführt auf die Einlaufschrägen 39 der Führungsschienen 14 auf. Aufgrund deren nach innen verlaufenden Verjüngung werden die Rollenhebel 12 beim Weiterfahren des Flurförderzeuges 1 in Richtung zur Fahrzeuglängsachse eingedrückt, wodurch die Hebelgetriebe 42 bewegt werden. Dabei verschieben sich die Kniehebel 5, 6 bei gleichzeitiger Verringerung ihres Öffnungswinkels 15 in eine in Fig. 3 strichpunktiert angedeutete Stellung, wobei die Kniegelenke 16 und die Gelenkpunkte 22 auf kreisbogenförmigen Bahnen in innere Positionen 16 a und 22 a wandern.

Die Auslenkbewegung der Gelenkpunkte 22 nach 22 a werden von den Federhebeln 23 durch die Zwangsführung der an diesen angelenkten Führungshülsen 24 in quasi Geradschub-Kurbelbewegungen auf der Querführung 25 umgesetzt, wobei die Führungshülsen 24 entgegen der Vorspannkraft des bzw. der Federmittel 26, 26 a, 26 b geradlinig verschoben werden. Dabei werden die Schaltmittel 30 von der Schaltplatte 31 kontaktiert und der Eigenantrieb des Flurförderzeuges 1 abgeschaltet. Durch die zuvor beschriebene Bewegung der Hebelgetriebe 42 wird der Schaltbügel 9 von seiner äußeren Betriebsstellung 37 entlang der Richtung des Bezugspfeiles 41 eingedrückt und befindet sich nun in seiner Außerbetriebsstellung 38, die innerhalb der endseitigen Fahrzeugkontur liegt.

Das Flurförderzeug 1 läuft nun mittels der Rollenbahnen 35 fremdangetrieben bis zum Ende der Schubverbandsstrecke weiter, wobei die Schubkräfte vom jeweils zuhinterst fahrenden Flurförderzeug 1 aufgrund der eingeschobenen Außerbetriebsstellung 38 der Schaltbügel 9 verlustfrei direkt auf die Fahrzeugrahmen 28 der vorderen Flurförderzeuge 1 übertragen werden können.

Bei Auflösung des Schubverbandes wird die mechanische Zwangsführung der Rollenhebel 12 innerhalb der Führungsschienen 14 wieder aufgehoben, indem die Rollenhebel 12 durch die sich nach außen erweiternden Auslaufschrägen 40 der Führungsschienen 14 wieder freigegeben werden. Durch die Vorspannkraft des bzw. der zusammengedrückten Federmittel 26, 26 a, 26 b werden die Führungshülsen 24 auf ihrer Querführung 25 automatisch nach außen gegen die Wellenhalter 27 verschoben und die Hebelgetriebe 42 solange wieder in entgegengesetzter Richtung bewegt, bis das verlängerte freie Ende des zweiten Hebelarms 6 gegen die Stellschraube 21 des am ersten Hebelarm 5 befestigten Anschlags 19 anstößt. Dabei wird der Öffnungswinkel 15 der Kniehebel 5, 6 wieder auf sein Ursprungsmaß vergrößert und der Schaltbügel 9 in seine außerhalb der Fahrzeugkontur liegende Außerbetriebsstellung 38 ausgefahren.

Aus Sicherheitsgründen ist bei einer Fahrzeugkollision mit einem Fahrbahnhindernis eine redundante Notabschaltung des Flurförderzeuges 1 vorgesehen, die nachfolgend näher erläutert wird.

Da das Personenschutz-Element 10 in Abhängigkeit vom Elastizitätsmodul dessen Material nur einen eingeschränkten Verformungsweg aufweist und demzufolge auch nur einen Teil der kinetischen Aufprallenergie beim Auffahren auf ein Hindernis absorbieren kann, wird in Abhängigkeit von der Fahrgeschwindigkeit des Flurförderzeuges 1 der Schaltbügel 9 nach innen gegen das Flurförderzeug 1 eingedrückt. Der dabei entstehende Bewegungsablauf des bzw. der Hebelgetriebe 42 entspricht im Prinzip dem zuvor beschriebenen, mit Ausnahme des Unterschiedes, daß die Verschiebekraft nicht seitlich über den Rollenhebel 12, sondern stattdessen frontal in Richtung der Fahrzeuglängsachse über den Schaltbügel 9 und die beweglichen Gelenkpunkte 7 in die Hebelgetriebe 42 eingeleitet wird. Die Notabschaltung des Fahrantriebes wird dabei über das Schaltmittel 30 ausgelöst.

Abhängig davon, ob sich das Hindernis mittig oder einseitig der Fahrbahn befindet, werden die beiden beweglichen Gelenkpunkte 7 und somit der Schaltbügel 9 entweder parallel oder versetzt verschoben. Bei letzterem besteht die Möglichkeit, daß sich nur einer der beiden Gelenkpunkte 7 verschiebt, während der andere in seiner ursprünglichen Position stehenbleibt (absolute Schrägstellung des Schaltbügels 9) oder beide Gelenkpunkte 7 versetzt zueinander verschoben werden, woraus sich unterschiedlich große Öffnungswinkel 15 der beidseitigen Kniehebel 5, 6 ergeben (leichte Schrägstellung des Schaltbügels 9).

Die Erfindung ist natürlich keinesfalls in das in den Figuren dargestellte und beschriebene Ausführungsbeispiel beschränkt. Es versteht sich von selbst, daß zahlreiche konstruktive Abwandlungen im Rahmen der Erfindung liegen, beispielsweise der Einsatz pneumatischer oder hydraulischer Federn sowie der Einsatz äquivalenter elektronischer, optischer oder optoelektronischer Schaltmittel, wie Lichtschranken, Leuchtdioden usw. Ebenso ist es denkbar, in Abhängigkeit von der Fahrzeuggeometrie und dem erforderlichen Schaltweg andersgeartete Koppel- bzw. Hebelgetriebe, beispielsweise mit mehr oder weniger als vier Gelenken, einzusetzen.

## Patentansprüche

1. Kollisionsschutzeinrichtung für fahrerlose Flurförderzeuge (1), vorzugsweise selbstfahrende Montageplattformen, mit front- und/oder endseitig des Flurförderzeuges angeordneten Schaltbügeln (9), die mittels beidseitiger Kniehebel (5, 6) am Flurförderzeug (1) zumindest in Richtung dessen Längsachse verschiebbar angelenkt sind, wobei die Schaltbügel (9) bei abstandsweiser Einzelfahrt der Flurförderzeuge in einer äußeren Betriebsstellung (37) maximal aus der Fahrzeugkontur hervorragen und beim Aufprall auf ein Hindernis über Schaltmittel (30) das Flurförderzeug verzögern und/oder dessen Fahrantrieb abschalten, und wobei die Schaltbügel (9) zur Bildung eines abstandslosen Schubverbandes zumindest zweier Flurförderzeuge in eine gegen das Flurförderzeug gerichtete Außerbetriebsstellung (38) eindrückbar sind,
**dadurch gekennzeichnet**,
daß die Verschiebung der Schaltbügel (9) von ihrer Betriebsstellung (37) in ihre Außerbetriebsstellung (38) und umgekehrt stationär auslösbar sowie automatisch steuerbar ist, wobei die Schaltmittel (30) zeitgleich mit der Verschiebung automatisch inaktivierbar und reaktivierbar sind und wobei die Außerbetriebsstellung (38) der Schaltbügel (9) vollständig innerhalb der Fahrzeugkontur liegt, dergestalt, daß die Schubkräfte vom jeweils zuhinterst fahrenden Flurförderzeug (1) direkt auf den Fahrzeugrahmen (28) des jeweils zuvor fahrenden Flurförderzeuges (1) übertragbar sind.

2. Kollisionsschutzeinrichtung nach Anspruch 1,
**dadurch gekennzeichnet**,
daß die Schaltbügel (9) gegenüber dem Flurförderzeug (1) federbelastet vorgespannt und gegen die Vorspannkraft mechanisch zwangsgeführt in ihre Außerbetriebsstellung (38) verschiebbar sind.

3. Kollisionsschutzeinrichtung nach Anspruch 1,
**dadurch gekennzeichnet**,
daß die Schaltbügel (9) gegenüber dem Flurförderzeug (1) federbelastet vorgespannt und gegen die Vorspannkraft zumindest von ihrer Betriebsstellung (37) in ihre Außerbetriebsstellung (38) motorisch verschiebbar sind.

4. Kollisionsschutzeinrichtung nach Anspruch 3,
**dadurch gekennzeichnet**,
daß zur motorischen Verschiebung der Schaltbügel (9) fahrzeugstationäre Zug- und/oder Druckmittel, vorzugsweise mechanischer Bauart, vorgesehen sind.

5. Kollisionsschutzeinrichtung nach einem oder mehreren der Ansprüche 3 und 4,
**dadurch gekennzeichnet**,
daß die motorische Verschiebung der Schaltbügel (9) mittels stationärer, vorzugsweise kontaktloser, Signalübertragung und/oder wegstreckenmeßabhängig auslösbar ist.

6. Kollisionsschutzeinrichtung nach einem oder mehreren der vorangehenden Ansprüche,
**dadurch gekennzeichnet**,
daß die Schaltbügel (9) mittels Federkraft automatisch wieder in ihre Betriebsstellung (37) verschiebbar sind.

7. Kollisionsschutzeinrichtung nach einem oder mehreren der vorangehenden Ansprüche,
**dadurch gekennzeichnet**,
daß die Schaltbügel (9) in ihre Außerbetriebsstellung (38) mechanisch arretierbar und entarretierbar sind.

8. Kollisionsschutzeinrichtung nach einem oder mehreren der vorangehenden Ansprüche,
**dadurch gekennzeichnet**,
daß jeder Kniehebel (5, 6) Teil eines zwischen dem Schaltbügel (9) und dem Flurförderzeug (1) angeordneten, mehrgelenkigen Hebelgetriebes (42) ist, das als Viergelenk ausgebildet ist.

9. Kollisionsschutzeinrichtung nach einem oder mehreren der vorangehenden Ansprüche,
**dadurch gekennzeichnet**,
daß ein erster Hebelarm (5) in einem fahrzeugfesten Gelenkpunkt (4) und ein zweiter Hebelarm (6) in einem schaltbügelfesten Gelenkpunkt (7) angelenkt sind und daß endseitig des zweiten Hebelarms (6) hinter dem Kniehebel (5, 6) ein Federhebel (23) angelenkt ist, dessen anderes Ende gegen Federkraft geradgeführt verschiebbar ist.

10. Kollisionsschutzeinrichtung nach einem oder mehreren der vorangehenden Ansprüche,
**dadurch gekennzeichnet**,
daß der Öffnungswinkel (15) des Kniehebels (5, 6) einsatz- und/oder geschwindigkeitsabhängig veränderbar ist, dergestalt, daß am ersten Hebelarm (5) ein dem freien Ende des zweiten Hebelarms (6) gegenüberliegender und mit diesem in Wirkverbindung stehender einstellbarer Anschlag (19) befestigt ist.

11. Kollisionsschutzeinrichtung nach einem oder mehreren der vorangehenden Ansprüche,
**dadurch gekennzeichnet**,
daß am ersten Hebelarm (5) ein der Fahrzeugaußenseite zugewandter Rollenhebel (12) befestigt ist, dessen endseitige Steuerrolle (13) mit einer sich im Einlaufbereich zur Schubverbandsstrecke in Fahrtrichtung verjüngenden und sich in deren Auslaufbereich erweiternden stationären Führungsschiene (14) in Wirkverbindung steht, dergestalt, daß beim Einlaufen eines Flurförderzeuges (1) in die Schubverbandsstrecke der erste Hebelarm (5) unter Verringerung des Öffnungswinkels (15) des Kniehebels (5, 6) eindrückbar ist, wobei der Federhebel (23) entgegen der Federkraft zumindest eines Federmittels (26) verschiebbar ist.

12. Kollisionsschutzeinrichtung nach einem oder mehreren der vorangehenden Ansprüche,
**dadurch gekennzeichnet**,
daß das Federmittel (26) auf einer fahrzeugstationären Querführung (25) zwischen Führungshülsen (24) der Federhebel (23) der beidseitigen Hebelgetriebe (42) angeordnet ist.

13. Kollisionsschutzeinrichtung nach Anspruch 12,
**dadurch gekennzeichnet**,
daß die Querführung (25) als motorisch antreibbare Gewindespindel ausgebildet ist, auf der die Führungshülsen (24) mittels Spindelmuttern zumindest in einer Richtung verschiebbar sind.

14. Kollisionsschutzeinrichtung nach einem oder mehreren der vorangehenden Ansprüche,
**dadurch gekennzeichnet**,
daß auf der Querführung (25) zwei, sich an einem mittigen, stationären Festanschlag (29) abstützende, separate Federmittel (26 a, 26 b) vorgesehen sind.

15. Kollisionsschutzeinrichtung nach einem oder mehreren der vorangehenden Ansprüche,
**dadurch gekennzeichnet**,
daß an den Führungshülsen (24) gegen die Vorspannkraft motorisch betätigbare Zugmittel befestigt sind.

16. Kollisionsschutzeinrichtung nach einem der vorangehenden Ansprüche,
**dadurch gekennzeichnet**,
daß die Federmittel (26, 26 a, 26 b) mechanischer Bauart sind.

17. Kollisionsschutzeinrichtung nach einem der vorangehenden Ansprüche,
**dadurch gekennzeichnet**,
daß die Federmittel (26, 26 a, 26 b) hydraulischer Bauart sind.

18. Kollisionsschutzeinrichtung nach einem der vorangehenden Ansprüche,
**dadurch gekennzeichnet**,
daß die Federmittel (26, 26 a, 26 b) pneumatischer Bauart sind.

19. Kollisionsschutzeinrichtung nach einem oder mehreren der vorangehenden Ansprüche,
**dadurch gekennzeichnet**,
daß im Verschiebebereich der Führungshülse (24) gegenüber der Querführung (25) zumindest ein fahrzeugfixiertes Schaltelement (30), vorzugsweise ausgebildet als Endschalter, vorgesehen ist.

20. Kollisionsschutzeinrichtung nach einem oder mehreren der vorangehenden Ansprüche,
**dadurch gekennzeichnet**,
daß die Führungshülse (24) mit einer dem Schaltelement (30) zugewandten und mit diesem in Wirkverbindung stehenden Schaltplatte (31) versehen ist, wobei der Schaltweg einstellbar ist, dergestalt, daß Schaltplatte (31) und/oder Schaltelement (30) in Richtung der Querführung (25) relativ zueinander verstellbar sind.

21. Kollisionsschutzeinrichtung nach einem oder mehreren der vorangehenden Ansprüche,
**dadurch gekennzeichnet**,
daß am vorderen Schaltbügel (9) leicht kompressible Personenschutz-Elemente (10) angeordnet sind, in denen redundant zum Schaltelement (30) zumindest ein signalauslösendes Schaltband (11) eingebettet ist.

22. Kollisionsschutzeinrichtung nach einem oder mehreren der vorangehenden Ansprüche,
**dadurch gekennzeichnet**,
daß der Nachlauf der Schaltbügel (9) größer ist als der Verzögerungsweg, insbesondere der Verzögerungsweg bis zum Fahrzeugstillstand.

## Claims

1. Collision protection device for driverless industrial trucks (1), preferably self-propelling assembly platforms, with switching bars (9) which are disposed at the front and/or end of the industrial truck and are articulated by means of toggle levers (5, 6) on both sides of the industrial truck (1) so that they can be moved at least in the direction of its longitudinal axis, wherein the switching bars (9) project maximally out of the vehicle contour in an outer operative position (37) while the industrial trucks are travelling spaced on their own, and decelerate the industrial truck and/or switch off its propulsion system by means of switching means (30) on encountering an obstacle, and wherein the switching bars (9) can be pressed in into an inoperative position (38) towards the industrial truck to form an unspaced pusher train of at least two industrial trucks, characterised in that the movement of the switching bars (9) from their operative position (37) into their inoperative position (38) and vice versa can be initiated when stationary and controlled automatically, the switching means (30) being capable of being deactivated and reactivated automatically at the same time as the movement, and the inoperative position (38) of the switching bars (9) lying completely inside the vehicle contour such that the pushing forces from the industrial truck (1) travelling at the rear can be transmitted directly to the vehicle frame (28) of the industrial truck (1) travelling in front.

2. Collision protection device according to claim 1, characterised in that the switching bars (9) are pre-loaded by spring loading in relation to the industrial truck (1) and can be moved into their inoperative position (38) forcibly guided mechanically against the pre-loading force.

3. Collision protection device according to claim 1, characterised in that the switching bars (9) are pre-loaded by spring loading in relation to the industrial truck (1) and can be moved by motor at least from their operative position (37) into their inoperative position (38) against the pre-loading force.

4. Collision protection device according to claim 3, characterised in that vehicle-stationary pulling and/or pushing devices, preferably of a mechanical kind, are provided for motorised movement of the switching bars (9).

5. Collision protection device according to one or more of claims 3 and 4, characterised in that the motorised movement of the switching bars (9) can be initiated by means of stationary, preferably contactless, signal transmission and/or according to distance measurement.

6. Collision protection device according to one or more of the preceding claims, characterised in that the switching bars (9) can be moved back into their operative position (37) automatically by means of spring force.

7. Collision protection device according to one or more of the preceding claims, characterised in that the switching bars (9) can be mechanically locked and unlocked in their inoperative position (38).

8. Collision protection device according to one or more of the preceding claims, characterised in that each toggle lever (5, 6) is part of a multi-link lever system (42) which is disposed between the switching bar (9) and the industrial truck (1) and is embodied as a four-link assembly.

9. Collision protection device according to one or more of the preceding claims, characterised in that a first lever arm (5) is articulated in a pivot point (4) fixed to the vehicle and a second lever arm (6) is articulated in a pivot point (7) fixed to the switching arm, and in that articulated at the end of the second lever arm (6) behind the toggle lever (5, 6) there is a spring lever (23), the other end of which can be moved guided in a straight line against spring force.

10. Collision protection device according to one or more of the preceding claims, characterised in that the opening angle (15) of the toggle lever (5, 6) can be changed according to the application and/or speed such that an adjustable stop (19) lying opposite the free end of the second lever arm (6) and standing in operative connection with it is fixed to the first lever arm (5).

11. Collision protection device according to one or more of the preceding claims, characterised in that a roller lever (12) facing the outside of the vehicle is fixed to the first lever arm (5) and its end control roller (13) stands in operative connection with a stationary guide rail (14) which narrows in the direction of travel in the entry area to the pusher train line and widens in its exit area, such that when an industrial truck (1) enters the pusher train line, the first lever arm (5) can be pressed in reducing the opening angle (15) of the toggle lever (5, 6), the spring lever (23) being capable of movement against the spring force of at least one spring means (26).

12. Collision protection device according to one or more of the preceding claims, characterised in that the spring means (26) is disposed on a vehicle-stationary transverse guide (25) between guide sleeves (24) of the spring levers (23) of the lever systems (42) on both sides.

13. Collision protection device according to claim 12, characterised in that the transverse guide (25) is embodied as a motor-drivable threaded spindle on which the guide sleeves (24) can be moved in at least one direction by means of spindle nuts.

14. Collision protection device according to one or more of the preceding claims, characterised in that two separate spring means (26a, 26b) braced on a central stationary fixed stop (29) are provided on the transverse guide (25).

15. Collision protection device according to one or more of the preceding claims, characterised in that pulling means which can be actuated by motor against the pre-loading force are fixed to the guide sleeves (24).

16. Collision protection device according to one of the preceding claims, characterised in that the spring means (26, 26a, 26b) are of a mechanical kind.

17. Collision protection device according to one of the preceding claims, characterised in that the spring means (26, 26a, 26b) are of a hydraulic kind.

18. Collision protection device according to one of the preceding claims, characterised in that the spring means (26, 26a, 26b) are of a pneumatic kind.

19. Collision protection device according to one or more of preceding claims, characterised in that at least one switching element (30) fixed to the vehicle, preferably embodied as a limit switch, is provided in the area of movement of the guide sleeve (24) in relation to the transverse guide (25).

20. Collision protection device according to one or more of the preceding claims, characterised in that the guide sleeve (24) is provided with a switching plate (31) facing the switching element (30) and standing in operative connection with this, the switching distance being adjustable such that switching plate (31) and/or switching element (30) are adjustable relative to one another in the direction of the transverse guide (25).

21. Collision protection device according to one or more of the preceding claims, characterised in that easily compressible personnel protection elements (10), in which at least one signal-tripping switching strip (11) is embedded redundant in relation to the switching element (30), are disposed on the front switching bar (9).

22. Collision protection device according to one or more of the preceding claims, characterised in that the lag of the switching bars (9) is greater than the deceleration distance, in particular the deceleration distance to vehicle standstill.

## Revendications

1. Système de protection contre les collisions pour des chariots de manutention sans conducteur (1), de préférence des plates-formes de montage automotrices avec des étriers de liaison (9) disposés sur la face avant et/ou arrière du chariot de manutention, étriers qui sont articulés au moyen de genouillères des deux côtés (5, 6) sur le chariot de manutention de façon à pouvoir se déplacer dans le sens de son axe longitudinal, les étriers de manutention (9), dans le cas où ils avancent individuellement à distance les uns des autres, venant en saillie dans une position de fonctionnement extérieure (37) au maximum hors du contour du chariot et, en cas de heurt contre un obstacle, le chariot de manutention étant ralenti à l'aide de moyens de commande (30) et/ou son système d'entraînement étant débrayé, tandis que les étriers de liaison (9), servant à former un convoi poussé, sans intervalles, d'au moins deux chariots de manutention, peuvent s'enfoncer dans une position de mise hors de fonctionnement (38) les faisants rentrer dans le chariot de manutention, système de protection contre les collisions caractérisé en ce que le passage des étriers de liaison (9) de leur position de fonctionnement (37) à leur position hors de fonctionnement (38) et inversement, peut être déclenché de façon stationnaire de même qu'il peut être commandé automatiquement, les moyens de commande (30) pouvant être désactivés et réactivés en même temps que s'effectue ce passage, et la position de mise hors de fonctionnement (38) des étriers de liaison (9) se trouvant complètement à l'intérieur du contour des chariots d'une manière telle que les forces de poussée puissent être transmises, par le chariot de manutention (1) venant le premier juste en arrière, directement au châssis (28) du chariot de manutention marchant juste devant (1).

2. Système de protection contre les collisions selon la revendication 1, caractérisé en ce que les étriers de liaison (9) sont comprimés par des ressorts par rapport au chariot de manutention (1) et peuvent être poussés dans leur position de mise hors de fonctionnement (38) en étant obligatoirement mis dans cette position de façon mécanique à l'encontre d'une force de compression

3. Système de protection contre les collisions, selon la revendication 1, caractérisé en ce que les étriers de liaison (9) sont comprimés par des ressorts par rapport au chariot de manutention (1) et peuvent être poussés, à l'aide d'un moteur, dans leur position de mise hors de fonctionnement (38) au moins à partir de leur position de fonctionnement (37), à l'encontre de la force de compression.

4. Système de protection contre les collisions selon la revendication 3, caractérisé en ce que pour le déplacement motorisé des étriers de liaison (9), on prévoit des moyens de traction et/ou de compression, de préférence de type mécanique, le chariot étant stationnaire.

5. Système de protection contre les collisions selon l'une ou plusieurs des revendications 3 et 4, caractérisé en ce que le déplacement motorisé des étriers de liaison (9) peut être déclenché au moyen d'une transmission de signaux stationnaire, de préférence sans contact et/ou en fonction d'une mesure de l'écartement.

6. Système de protection contre les collisions selon l'une ou plusieurs des revendications précédentes, caractérisé en ce que les étriers de liaison (9) peuvent être mis à nouveau dans leur position de fonctionnement (37) de façon automatique, grâce à la force des ressorts.

7. Système de protection contre les collisions selon l'une ou plusieurs des revendications précédentes, caractérisé en ce que les étriers de liaison (9) peuvent être bloqués dans leur position de mise hors service (38) et débloqués mécaniquement.

8. Système de protection contre les collisions selon l'une ou plusieurs des revendications précédentes, caractérisé en ce que chaque genouillère (5, 6) fait partie d'un mécanisme de transmission à leviers (42) disposé entre les étriers de liaison (9) et le chariot de manutention (1), à articulations multiples, qui est conçu sous la forme d'un quadrilatère articulé.

9. Système de protection contre les collisions selon l'une ou plusieurs des revendications précédentes, caractérisé en ce qu'un premier bras de levier (5) est articulé dans un point d'articulation (4) solidaire du chariot, et un second bras de levier (6) est articulé dans un point d'articulation (7) solidaire de l'étrier de liaison, et en ce qu'à l'extrémité du second bras de levier (6), derrière la genouillère (5, 6), est articulé un levier à ressort (23) dont l'autre extrémité peut être déplacée en ligne droite à l'encontre de la force d'un ressort.

10. Système de protection contre les collisions selon l'une ou plusieurs des revendications précédentes, caractérisé en ce que l'angle d'ouverture (15) de la genouillère (5, 6) peut être modifié, en fonction de l'utilisation et/ou de la vitesse d'une manière telle que soit fixée sur le premier bras de levier (5) une butée (19) située en regard de l'extrémité libre du deuxième bras de levier (6) et se trouvant, de façon réglable, en liaison opérationnelle avec celui-ci.

11. Système de protection contre les collisions selon l'une ou plusieurs des revendications précédentes, caractérisé en ce que l'on fixe sur le premier bras de levier (5) un levier à galet (12) tourné vers le côté extérieur du chariot, levier dont le galet terminal de commande (13) se trouve en liaison opérationnelle avec un rail de guidage (14) stationnaire qui va en se rétrécissant dans le sens de la marche dans la zone d'entrée du parcours de marche en convoi, et qui va en s'élargissant dans sa zone de sortie, d'une manière telle que, lors de l'entrée d'un chariot de manutention (1) dans le parcours de marche en convoi, on puisse enfoncer le premier bras de levier (5) en réduisant l'angle d'ouverture (15) de la genouillère (5, 6), le levier à ressort (23) pouvant être déplacé à l'encontre de la force d'au moins un organe élastique (26).

12. Système de protection contre les collisions selon l'une ou plusieurs des revendications précédentes, caractérisé en ce que l'organe élastique (26) est disposé sur un guide transversal (25) entre les douilles de guidage (24) des leviers à ressort (23) des systèmes de transmission à levier des deux côtés (42).

13. Système de protection contre les collisions selon la revendication 12, caractérisé en ce que le guide transversal (25) est constitué sous la forme d'une broche filetée pouvant être entraînée par un moteur, sur laquelle peuvent se déplacer, au moins dans une direction, les douilles de guidage (24) au moyen d'écrous.

14. Système de protection contre les collisions selon l'une ou plusieurs des revendications précédentes, caractérisé en ce que l'on prévoit sur le guide transversal (25) deux organes élastiques (26a, 26b) séparés, s'appuyant sur une butée fixe (29) stationnaire située au milieu.

15. Système de protection contre les collisions selon l'une ou plusieurs des revendications précédentes, caractérisé en ce qu'on fixe sur les douilles de guidage (24) des moyens de traction pouvant être actionnés par un moteur à l'encontre de la force de précontrainte.

16. Système de protection contre les collisions selon l'une ou plusieurs des revendications précédentes, caractérisé en ce que les moyens élastiques (26, 26a, 26b) sont de type mécanique.

17. Système de protection contre les collisions selon l'une ou plusieurs des revendications précédentes, caractérisé en ce que les moyens élastiques (26, 26a, 26b) sont de type hydraulique.

18. Système de protection contre les collisions selon l'une ou plusieurs des revendications précédentes, caractérisé en ce que les moyens élastiques (26, 26a, 26b) sont de type pneumatique.

19. Système de protection contre les collisions selon l'une ou plusieurs des revendications précédentes, caractérisé en ce que dans la zone de déplacement des douilles de guidage (24) par rapport au guide transversal (25), on prévoit au moins un élément de commande (30) fixé sur le chariot, constitué de préférence sous la forme d'un interrupteur de fin de course.

20. Système de protection contre les collisions selon l'une ou plusieurs des revendications précédentes, caractérisé en ce que la douille de guidage (24) est pourvue d'une plaque de commande (31) tournée vers l'élément de commande (30) et se trouvant en liaison opérationnelle avec celui-ci, le trajet de commande étant réglable de telle façon que la plaque de commande (31) et/ou l'élément de commande (30) soient déplaçables dans le sens du guide transversal (25) l'un par rapport à l'autre.

21. Système de protection contre les collisions selon l'une ou plusieurs des revendications précédentes, caractérisé en ce que l'on dispose, sur l'étrier de liaison avant (9) des éléments de protection pour les personnes (10) qui sont légèrement compressibles et dans lesquels est incorporée en redondance avec l'élément de commande (30), au moins une bande de commande (11) déclenchant un signal.

22. Système de protection contre les collisions selon l'une ou plusieurs des revendications précédentes, caractérisé en ce que la marche à vide des étriers de liaison (9) est plus grande que le trajet de ralentissement, en particulier le trajet de ralentissement jusqu'à l'arrêt du chariot.
